(19) Europäisches Patentamt
European Patent Office
Office européen des brevets

(11) **EP 2 359 504 B1**

(12) **FASCICULE DE BREVET EUROPEEN**

(45) Date de publication et mention
de la délivrance du brevet:
**29.05.2013 Bulletin 2013/22**

(21) Numéro de dépôt: **09815681.3**

(22) Date de dépôt: **23.09.2009**

(51) Int Cl.:
***H04B 10/2507*** *(2013.01)*   ***H04B 1/69*** *(2011.01)*

(86) Numéro de dépôt international:
**PCT/EP2009/062342**

(87) Numéro de publication internationale:
**WO 2010/034753 (01.04.2010 Gazette 2010/13)**

(54) **METHODE D'ETALEMENT SPECTRAL D'UN SIGNAL A BANDE ETROITE**

VERFAHREN ZUR AUSBREITUNG DES SPEKTRUMS EINES SCHMALBANDSIGNALS

METHOD FOR SPREADING THE SPECTRUM OF A NARROWBAND SIGNAL

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **26.09.2008 FR 0856475**

(43) Date de publication de la demande:
**24.08.2011 Bulletin 2011/34**

(73) Titulaire: **Commissariat à l'Énergie Atomique
et aux Énergies Alternatives
75015 Paris (FR)**

(72) Inventeurs:
• **PENNINCKX, Denis
F-33610 Cestas (FR)**
• **HOCQUET, Steve
F-33400 Talence (FR)**

(74) Mandataire: **Ilgart, Jean-Christophe et al
BREVALEX
95 rue d'Amsterdam
75378 Paris Cedex 8 (FR)**

(56) Documents cités:
**EP-A- 0 730 190      US-A1- 2007 140 704
US-B1- 6 282 003      US-B1- 6 535 315**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

La présente invention concerne de manière générale une méthode d'étalement spectral. Elle trouve notamment application dans la suppression de la diffusion de Brillouin stimulée dans les fibres optiques et les systèmes lasers de forte puissance. Elle peut s'appliquer également aux systèmes de télécommunication multifréquence.

**ÉTAT DE LA TECHNIQUE ANTÉRIEURE**

La diffusion de Brillouin est un phénomène bien connu en optique qui peut s'interpréter d'un point de vue quantique comme une interaction inélastique entre un photon et un phonon. Lorsqu'une onde optique subit une diffusion de Brillouin, l'onde diffusée comprend une première composante décalée vers les basses fréquences, dite onde Stokes et une second composante, décalée vers les hautes fréquences, dite onde anti-Stokes. Il s'agit alors de diffusion de Brillouin spontanée.

Lorsque la densité de puissance optique est élevée, par exemple pour des faisceaux laser de forte puissance ou pour des faisceaux de propageant dans des milieux confinés tels que des fibres optiques, le champ électromagnétique peut induire des vibrations acoustiques dans le milieu de propagation. La diffusion des photons par les phonons ainsi générés se manifeste par une amplification de l'onde Stokes, phénomène connu sous le nom de diffusion Brillouin stimulée. L'onde Stokes est rétrodiffusée c'est-à-dire qu'elle se propage dans une direction opposée à celle de l'onde incidente. Elle peut par conséquent endommager la source optique ou réduire considérablement la puissance optique transmise. Elle peut aussi se propager perpendiculairement à l'onde incidente, ce qui peut endommager les optiques de grande dimension.

L'effet de la diffusion Brillouin stimulée aussi désignée par SBS *(Stimulated Brillouin Scattering)* est d'autant moins important que la largeur spectrale du faisceau est plus grande. Il est connu d'élargir le spectre de la source optique au moyen d'une modulation de fréquence ou d'une modulation de phase, dite modulation anti-Brillouin afin de combattre l'effet SBS. La modulation de phase d'une onde s'exprime mathématiquement comme une multiplication par un terme $e^{j\varphi(t)}$ et, dans le cas où la modulation de phase est sinusoïdale :

$$\varphi(t) = m \sin(2\pi f_m t) \tag{1}$$

où $m$ et $f_m$ sont respectivement la profondeur et la fréquence de la modulation de phase.

Dans l'espace spectral, la modulation sinusoïdale de phase se traduit par conséquent par une convolution par un peigne de Dirac :

$$P(f) = \sum_{k=-\infty}^{k=+\infty} J_k(m)\delta(f - kf_m) \tag{2}$$

où $J_k(.)$ est la fonction de Bessel de première espèce d'ordre $k$ et $\delta(.)$ est la distribution de Dirac. Ainsi, pour une source monochromatique, le spectre du signal modulé est composé d'une infinité de raies espacées de $f_m$ et disposées symétriquement par rapport à la fréquence de la source. Toutefois, on peut montrer (règle de Carson) que 98% de l'énergie du signal modulé se trouve dans une bande spectrale de largeur $2(m+1)f_m$ autour de la fréquence de la source. On comprend donc que plus on augmente la profondeur de modulation $m$, plus l'étalement spectral sera important.

La densité spectrale de puissance du signal modulé peut cependant présenter de fortes variations dans la bande en question. En particulier, certaines raies situées près de la porteuse sont de très faible intensité voire d'intensité nulle car elles correspondent à des zéros de la fonction de Bessel. Or, pour obtenir une réduction efficace de l'effet SBS, sans élargir indûment le spectre il faut obtenir un élargissement spectral aussi homogène que possible. En d'autres termes, pour une puissance d'onde incidente donnée et une bande spectrale donnée, on obtiendra une meilleure réduction de l'effet SBS si la distribution de la densité spectrale du signal modulé est uniforme dans cette bande. Alternativement, à taux de rétrodiffusion donné, la bande du signal modulé sera la plus étroite lorsque la distribution de la densité spectrale sera la plus uniforme.

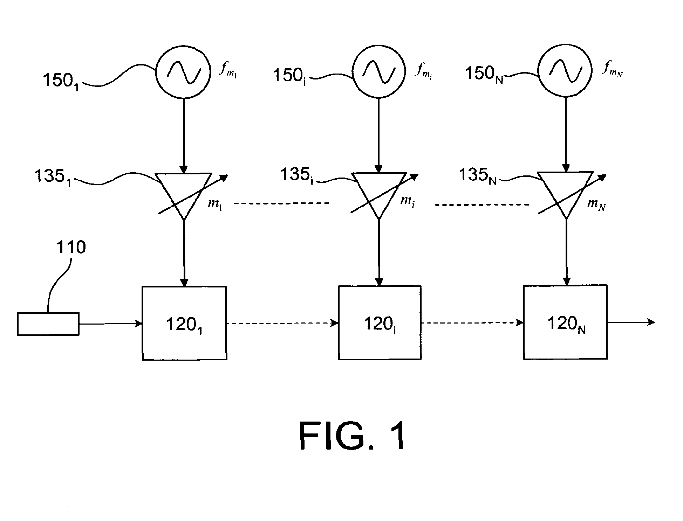

Le document US-B-5566381 décrit une méthode de modulation de phase visant à obtenir un spectre étalé relativement uniforme. Cette modulation de phase fait intervenir une pluralité de modulateurs de phase cascadés avec différentes profondeurs de modulation et différentes fréquences de modulation, comme représenté en Fig. 1. Plus précisément, le faisceau optique généré par le laser 110 est modulé successivement par les modulateurs de phase $120_1$ à $120_N$, chaque modulateur $120_i$ étant contrôlé par un signal de fréquence $f_i$, généré par l'oscillateur $150_i$ et amplifié par l'amplificateur $135_i$ de gain $m_i$. La modulation globale de phase peut s'exprimer sous la forme $e^{j\varphi(t)}$ avec :

$$\varphi(t) = \sum_{i=1}^{N} m_i \sin(2\pi f_{m_i} t) \qquad (3)$$

Toutefois, la modulation proposée ne donne pas de bons résultats en règle générale. L'exemple cité avec $N = 2$, $f_2 = f_1/3$, $m_1 = m_2 = 0.45\pi$ ne permet notamment pas d'obtenir le résultat annoncé d'un spectre plat sur 9 raies de part et d'autre de la porteuse.

Le document US-B-6282003 reprend l'exemple de modulation de phase précédent c'est-à-dire une phase modulée de la forme :

$$\varphi(t) = m_1 \sin(2\pi f_1 t) + m_2 \sin(2\pi f_2 t) \qquad (4)$$

avec $f_2 = 3f_1$), et propose de rechercher les valeurs des profondeurs de modulation $m_1$ et $m_2$ qui correspondent à la fois à un spectre uniforme et à un point de fonctionnement peu sensible aux variations des profondeurs de modulation. Toutefois, comme dans le cas précédent, les variations d'intensité des raies spectrales autour de la porteuse, à savoir aux fréquences $f_0+nf_1$ où $f_0$ est la fréquence de la porteuse et $n$ est un entier relatif compris entre -10 et +10, sont importantes. Plus précisément, l'intensité d'une raie spectrale distante de $mf_1$ de la fréquence porteuse est donnée par :

$$I_n = \sum_{k=-\infty}^{+\infty} J_{n-3k}^2(m_1) J_k^2(m_2) \qquad (5)$$

On constate que $I_n$ varie en fonction de $n$, notamment lorsque $m_1$ n'est pas négligeable par rapport à 1, et que l'étalement spectral n'est donc toujours pas uniforme.

Un autre exemple de l'art anterieur; US6535315.

Dans un autre domaine technique, à savoir celui des télécommunications de type multifréquence, par exemple pour des systèmes de télécommunications optiques WDM (*Wavelength Division Multiplexing)* ou encore pour des systèmes de télécommunications à accès par multiplexage de fréquence ou FDM (*Frequency Division Multiplex),* il est quelquefois utile de pouvoir disposer d'un peigne de fréquences. Ce peigne peut être généré comme on l'a vu plus haut en effectuant une modulation sinusoïdale de la phase d'une porteuse. Il importe généralement que les amplitudes des différentes porteuses soient sensiblement égales, par exemple pour garantir des conditions de propagation similaires, optimiser l'amplification etc.

Le but de la présente invention est par conséquent de proposer une méthode d'étalement spectral par modulation de phase permettant d'obtenir une densité spectrale plus uniforme que dans l'état de la technique.

**EXPOSÉ DE L'INVENTION**

La présente concerne une méthode d'étalement spectral d'un signal à bande étroite, dans laquelle on module ledit signal en phase à l'aide d'un signal de modulation de phase constitué d'une pluralité de composantes sinusoïdales, ladite pluralité comprenant une composante à une fréquence fondamentale et au moins une composante à une fréquence harmonique de cette fréquence, lesdites composantes sinusoïdales étant synchrones et affectées de phases respectivement égales à des multiples successifs de $\pi/2$.

Selon une première variante, le signal de modulation est constitué de la composante à la fréquence fondamentale et d'une composante à la fréquence double de cette fréquence, la composante à la fréquence fondamentale étant d'amplitude sensiblement égale à 1.2 et la composante à la fréquence double étant d'amplitude sensiblement égale à 5.9, la phase de la composante à la fréquence double étant décalée de$\pm$ $\pi/2$ par rapport à celle de la composante à la fréquence fondamentale.

Selon une seconde variante, le signal de modulation est constitué de la composante à la fréquence fondamentale et d'une composante à la fréquence triple de cette fréquence, les deux composantes étant de même amplitude sensiblement égale à $0.45\pi$, la phase de la composante à la fréquence triple étant décalée de $\pm\pi/2$ par rapport à celle de la composante à la fréquence fondamentale.

Selon une troisième variante le signal de modulation est constitué de la composante à la fréquence fondamentale, d'une composante à la fréquence double et d'une composante à la fréquence triple de cette fréquence, l'amplitude de la composante à la fréquence fondamentale étant sensiblement égale à 1.4, l'amplitude de la composante à la fréquence double étant comprise entre 2 et 20 et l'amplitude de la composante à la fréquence triple étant sensiblement égale à 0.4, les phases des composantes à la fréquence double et triple étant respectivement décalées de $\pm\pi/2$ et de $\pi$ par rapport à celle de la composante fondamentale.

Dans tous les cas, le signal à bande étroite peut être une onde optique ou une porteuse radiofréquence.

La modulation du signal à bande étroite peut être réalisée au moyen d'une modulation successive de ce signal par les différentes composantes sinusoïdales du signal de modulation.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 illustre un dispositif d'étalement spectral par modulation de phase connu de l'état de la technique ;
La Fig. 2A représente un spectre étalé obtenu au moyen du dispositif de la Fig. 1 ;
Les Figs. 2B et 2C représentent des spectres étalés obtenus par la méthode d'étalement spectral selon l'invention ;
La Fig. 3 représente l'écart à l'uniformité spectrale d'un premier exemple de signal modulé en phase ;
La Fig. 4 représente l'écart à l'uniformité spectrale d'un second exemple de signal modulé en phase ;
La Fig. 5 représente des courbes de niveau iso-écart à l'uniformité spectrale d'un troisième exemple de signal modulé en phase ;
La Fig. 6 représente les courbes de niveau iso-écart à l'uniformité spectrale d'un quatrième exemple de signal modulé en phase ;
La Fig. 7A représente un premier exemple de dispositif de modulation de phase mettant en oeuvre la méthode d'étalement spectral selon l'invention ;
La Fig. 7B représente un second exemple de dispositif de modulation de phase mettant en oeuvre la méthode d'étalement spectral selon l'invention.

## EXPOSÉ DÉTAILLÉ DE MODES DE RÉALISATION PARTICULIERS

Nous considérerons de manière générale une méthode d'étalement spectral d'un signal à bande étroite, optique ou radiofréquence, au moyen d'une modulation de phase.

A titre d'illustration, nous prendrons le cas particulier d'un signal monochromatique ou un signal de porteuse pouvant être représenté sous la forme $E_0 e^{j\omega_0 t}$ subissant une modulation de phase définie par:

$$\varphi(t) = \sum_{i=1}^{N} m_i \sin(\omega_i t + \varphi_i) \qquad (6)$$

où les $\omega_i = 2\pi f_i$ sont des fréquences angulaires multiples d'une fréquence de modulation fondamentale $\Omega = 2\pi f$; $m_i$ et $\varphi_i$ sont les profondeurs de modulation et les phases respectives des différentes composantes harmoniques de la modulation de phase. Compte tenu des notations précédentes, le signal modulé s'exprime alors bien entendu sous la forme

$$E_0 e^{j(\omega_0 t + \varphi(t))}.$$

Il est important de noter que le signal de modulation de phase défini par (6) comprend une pluralité de composantes sinusoïdales de fréquences $\omega_i$ dont les phases à l'origine $\varphi_i$ peuvent être choisies quelconques.

L'invention repose sur un choix judicieux des phases $\varphi_i$ conduisant à une amélioration sensible de l'uniformité de la densité spectrale. Dans la suite, on mesurera l'écart à l'uniformité spectrale, c'est-à-dire l'écart à la platitude du spectre, par le rapport entre l'écart-type de la densité spectrale dans la bande du signal modulé et sa valeur moyenne. On entend ici par bande du signal modulé la bande spectrale contenant 95% de la puissance de ce signal. Si on désigne par $\mu_k$ l'intensité des raies spectrales dans cette bande et $\mu$ leur moyenne, l'écart à l'uniformité spectrale dans cette bande ne sera autre que $\sigma/\overline{\mu} = \sqrt{\sum_k \left(\mu_k/\overline{\mu} - 1\right)^2}$.

On considèrera dans un premier temps une modulation de phase à deux composantes sinusoïdales, telle que :

$$\varphi(t) = m_1 \sin \Omega t + m_2 \sin\left(2\Omega t + \varphi_2\right) \qquad (7)$$

où l'on a pris conventionnellement $\varphi_1 = 0$ à l'origine. Pour un couple quelconque $m_1, m_2$ de profondeurs de modulation donné, l'écart minimum à l'uniformité spectrale est obtenu pour $\varphi_2 = \pm\pi/2$. Bien que ce résultat soit difficile à démontrer mathématiquement, il a pu être observé par simulation dans un grand nombre de cas.

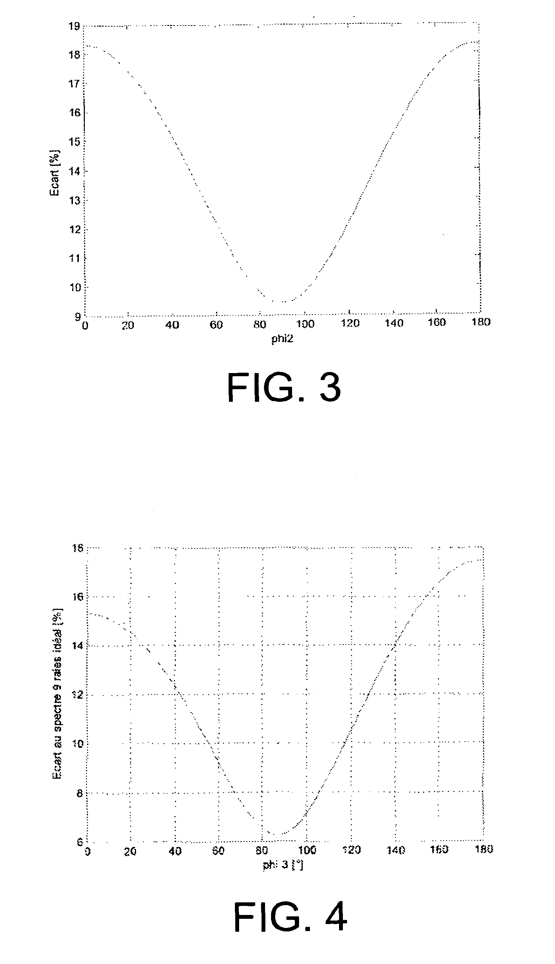

A titre d'exemple, la Fig. 3 représente l'écart à l'uniformité spectrale du signal modulé en phase par le signal de modulation (7), en fonction de la phase $\varphi_2$. L'écart est indiqué en pourcentage et la phase est indiquée en degrés. Les valeurs des profondeurs de modulation ont été choisies telles que $m_1 = 1.2$, $m_2 = 5.9$ et la bande spectrale retenue était $[-25f + f_0, f_0 + 25f]$. On constate, comme annoncé, que l'écart minimum est atteint pour $\varphi_2 = \pi/2$.

De manière similaire, si l'on part de l'exemple de modulation de phase donné dans l'art antérieur, à savoir $\varphi(t) = m_1 \sin\Omega t + m_3 \sin 3\Omega t$, avec $m_1 = m_3 = 0.45\pi$ et si l'on introduit désormais un déphasage entre les composantes sinusoïdales selon (6), soit :

$$\varphi(t) = m_1 \sin \Omega t + m_2 \sin(3\Omega t + \varphi_3) \qquad (8)$$

on constate que l'écart à l'uniformité spectrale atteint un minimum lorsque $\varphi_3 = \pm\pi/2$. La Fig. 4 représente l'écart à l'uniformité spectrale du signal modulé, exprimé en pourcentage, en fonction de la phase $\varphi_3$, exprimée en degrés.

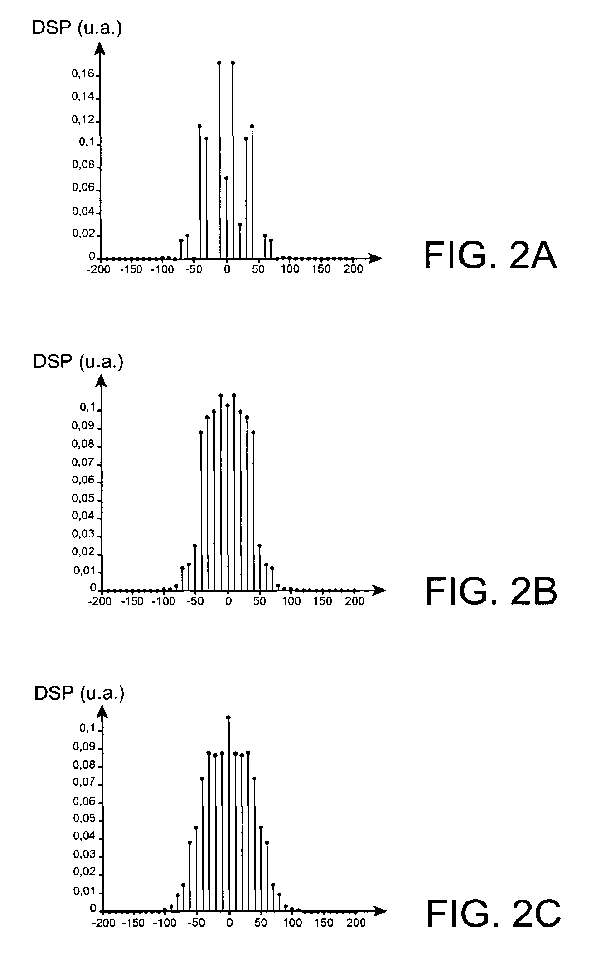

Un signal de modulation de phase à deux composantes sinusoïdales suffit à obtenir un spectre quasi-plat (écart à l'uniformité de moins de 10%) dans une bande spectrale $[-9f + f_0, f_0 + 9f]$ comme illustré en Fig. 2B. Pour un étalement spectral plus important, il convient d'ajouter une composante sinusoïdale supplémentaire à une nouvelle harmonique, par exemple :

$$\varphi(t) = m_1 \sin \Omega t + m_2 \sin\left(2\Omega t + \varphi_2\right) + m_3 \sin(3\Omega t + \varphi_3) \qquad (9)$$

l'écart minimum à l'uniformité spectrale étant obtenu pour les valeurs de phase $\varphi_2 = \pm\pi/2$ et $\varphi_3 = \pi$. Avantageusement, on choisira les profondeurs de modulation telles que $m_1 = 1.4$, $2 \leq m_2 \leq 20$ et $m_3 = 0.4$.

La Fig. 2C montre à titre d'exemple le spectre du signal modulé pour $m_2 = 2.4$, la bande spectrale est de 11 raies de part et d'autre de la fréquence centrale et l'écart à l'uniformité est inférieur à 10%. Si l'on augmente la profondeur de modulation $m_2$ jusqu'à 20 le spectre s'élargit progressivement tout en respectant un écart à l'uniformité inférieur à 10%.

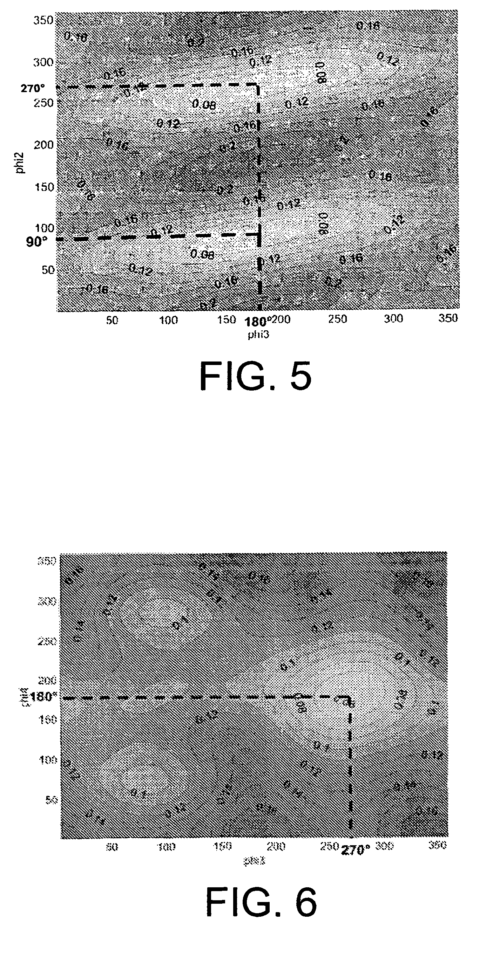

La Fig. 5 représente les courbes iso-écart à l'uniformité spectrale d'un signal modulé en phase par le signal de modulation (9) avec $m_1 = 1.4$, $m_2 = 5.6$ et $m_3 = 0.4$, en fonction des valeurs des phases $\varphi_2$ et $\varphi_3$' exprimées en degrés. Pour chaque courbe iso-écart est indiquée la valeur de l'écart correspondant au sein de la bande spectrale $[-25f + f_0, f_0 + 25f]$. On constate, comme annoncé, que l'écart minimal est obtenu pour $\varphi_3 = \pi$ et $\varphi_2 = \pm\pi/2$, l'écart à l'uniformité étant alors inférieur à 6%.

La modulation en phase précédente donne de bons résultats dans la bande [-25$f$+$f_0$,$f_0$+25$f$]. Pour un étalement spectral au-delà de cette bande, il convient d'introduire la quatrième harmonique à savoir :

$$\varphi(t) = m_1 \sin \omega t + m_2 \sin\left(2\Omega t + \varphi_2\right) + m_3 \sin(3\Omega t + \varphi_3) + m_4 \sin(4\Omega t + \varphi_4)$$

$$(10)$$

l'écart minimum à l'uniformité spectrale étant atteint pour $\varphi_2 = \pi/2$, $\varphi_3 = \pi$, $\varphi_4 = 3\pi/2$ et pour $\varphi_2 = -\pi/2$, $\varphi_3 = -\pi$, $\varphi_4 = -3\pi/2$.

La Fig. 6 représente les courbes iso-écart à l'uniformité spectrale d'un signal modulé en phase par le signal de modulation (10) avec $m_1$ = 1.2, $m_2$ = 6.8 , $m_3$ =0.4 , $m_4$ =0.6 et $\varphi_2$ = $\pi/2$, en fonction des valeurs des phases $\varphi_3$ et $\varphi_4$' exprimées en degrés. Pour chaque courbe iso-écart est indiquée la valeur de l'écart correspondant au sein de la bande spectrale [-31$f$+$f_0$,$f_0$+31$f$]. On constate là encore que l'écart minimal, inférieur à 6%, est obtenu pour $\varphi_3$=$\pi$ et $\varphi_4$ = $\pi/2$. De même, si l'on avait fixé $\varphi_2$ = -$\pi/2$, on aurait montré que cet écart minimal était atteint pour $\varphi_3$ = $\pi$ et $\varphi_4$ = $\pi/2$.

De manière générale, on constate que si l'on utilise un signal de modulation de phase tel que défini par (6), l'écart à l'uniformité spectrale est minimal lorsque les phases des différentes composantes sinusoïdales du signal de modulation de phase sont distribuées sur des multiples entiers successifs de $\pi/2$. Si la composante fondamentale est prise comme référence, les composantes harmoniques non nulles seront alors affectées des déphasages

$$0, \frac{\pi}{2}, \pi, \frac{3\pi}{2}, ..,(N-1)\frac{\pi}{2}$$ si l'ordre de distribution suit le sens trigonométrique ou bien de déphasages

$$0, -\frac{\pi}{2}, -\pi, -\frac{3\pi}{2}, .., -(N-1)\frac{\pi}{2}$$ si cet ordre suit le sens inverse.

Dans tous les cas, on notera que plus le nombre $N$ d'harmoniques est élevé, plus l'étalement spectral du signal est important.

Il est quelquefois avantageux de fixer, outre les valeurs de phase $\varphi_i$ (à des multiples entiers successifs de $\pi/2$), les valeurs des profondeurs de modulation $m_i$ à l'exception d'une, notée $m_{i0}$. On obtient alors une forme de spectre paramétrable avec un degré de liberté. Par exemple, dans le cas d'une modulation de phase à trois composantes sinusoïdales donnée par l'expression (9), la profondeur de modulation $m_2$ permet de paramétrer la forme du spectre en variant entre 2 et 20.

Lorsque les valeurs de phase $\varphi_i$ prennent les valeurs précitées, le spectre est non seulement plat mais aussi symétrique autour de la fréquence porteuse. Ceci est avantageux dans la mesure où la fréquence porteuse $\omega_0$ reste la fréquence centrale.

Cette propriété de symétrie peut être montrée pour une modulation de phase à deux composantes sinusoïdales.

En effet, une onde $E_0 e^{j\omega_0 t}$ modulée en phase par le signal (7) peut s'écrire sous la forme du produit :

$$E_0 e^{j\omega_0 t} . e^{jm_1 \sin \Omega t} . e^{jm_2 \sin(2\Omega t + \varphi_2)}$$

$$(11)$$

Son spectre est donc de la forme $P(\omega)$=$p(\omega+\omega_0)$ où $p(\omega)$ est la convolution des spectres des deux derniers termes de (11) :

$$p(\omega) = \sum_{\ell} J_{\ell}\left(m_1\right)\delta\left(\omega - \ell\Omega\right) \otimes \sum_{k} J_k\left(m_2\right)e^{jk\varphi_2}\delta\left(\omega - 2k\Omega\right)$$

$$(12)$$

c'est-à-dire :

$$p(\omega) = \sum_{\ell}\left( \sum_{k} J_{\ell-2k}(m_1) J_k(m_2) e^{jk\varphi_2} \right) \delta(\omega - \ell\Omega) \qquad (13)$$

Le spectre du signal modulé en phase est par conséquent un spectre de raies espacées de $\Omega$. L'intensité de la raie en $-n\Omega$ est donnée par $|p(-n\Omega)|^2$ :

$$p(-n\Omega) = \sum_{k} J_{-n-2k}(m_1) J_k(m_2) e^{jk\varphi_2} \qquad (14)$$

qui peut encore s'écrire :

$$p(-n\Omega) = \sum_{k} J_{-n+2k}(m_1) J_{-k}(m_2) e^{-jk\varphi_2} \qquad (15)$$

et compte tenu que $J_{-\ell}(m) = (-1)^\ell J_\ell(m)$ :

$$p(-n\Omega) = (-1)^n \sum_{k} J_{n-2k}(m_1) J_k(m_2)(-1)^k e^{-jk\varphi_2} \qquad (16)$$

Or étant donné que pour $\varphi_2 = \pm\pi/2$,

$$p(-n\Omega) = (-1)^n p(n\Omega) \qquad (17)$$

La densité spectrale $|p(\omega)|^2$ est donc symétrique.

Ce résultat se généralise sans grande difficulté au cas où le signal de modulation de phase est constitué d'une pluralité $N$ de composantes sinusoïdales présentant des phases $\varphi_i$ égales à des valeurs des multiples entiers successifs de $\pi/2$.

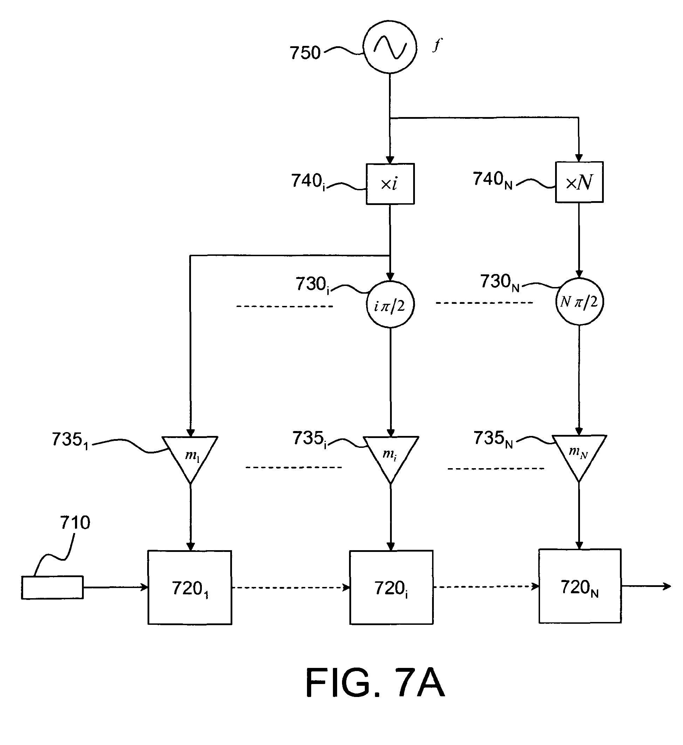

La Fig. 7A montre un premier exemple de réalisation d'un modulateur de phase mettant en oeuvre la méthode d'étalement spectral selon l'invention.

Le faisceau laser émis par la source laser 710 est modulé successivement par une pluralité de modulateurs de phase $720_1$ à $720_N$ arrangés en cascade. L'oscillateur 750 génère un signal sinusoïdal de fréquence fondamentale $f=\Omega/2\pi$. Ce signal est fourni aux multiplicateurs de fréquence $740_2,..,740_N$ pour générer des signaux sinusoïdaux ayant des fréquences multiples de la fréquence fondamentale. Les signaux générés sont synchrones avec le signal fondamental et ont tous la même phase à l'origine. Ces signaux sont ensuite déphasés dans les déphaseurs $730_2,..,730_N$. Les déphasages introduits correspondent à des multiples entiers successifs de $\pi/2$. En toute rigueur, ces déphasages doivent être corrigés pour tenir compte du temps de propagation entre les modulateurs $720_1$ à $720_N$. Le signal fondamental et les signaux harmoniques déphasés sont ensuite amplifiés par les amplificateurs $735_1,..,735_N$ de gains respectifs $m_1,...,m_N$ avant de contrôler les modulateurs de phase $720_1$ à $720_N$.

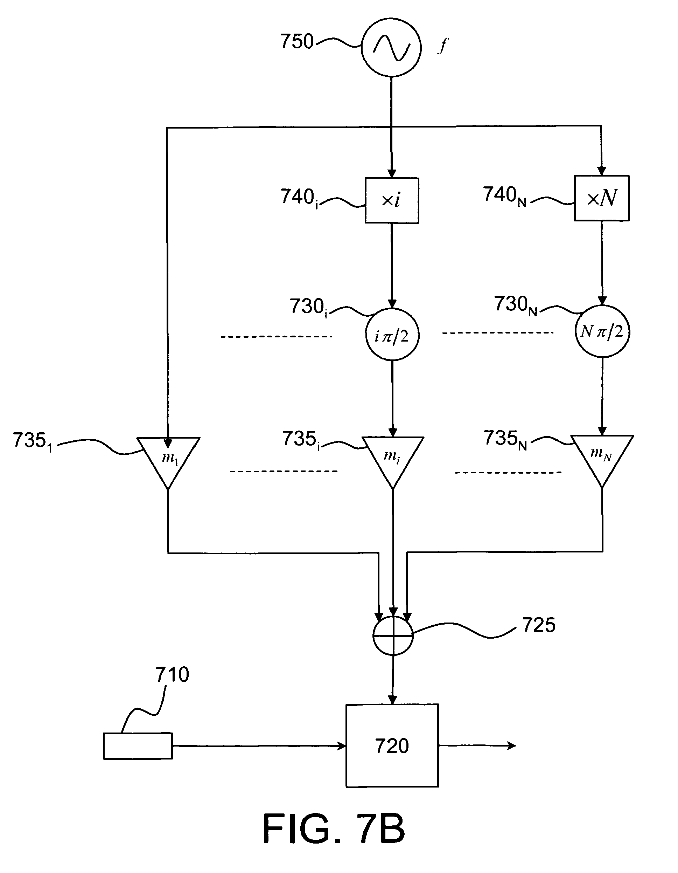

La Fig. 7B montre un second exemple de réalisation d'un modulateur de phase pour mettre en oeuvre la méthode d'étalement spectral selon l'invention.

Les éléments identiques à ceux de la Fig. 7A portent les mêmes signes de référence. A la différence du dispositif précédent, un seul modulateur de phase, 720, est utilisé. Ce modulateur reçoit comme signal de modulation le signal électrique résultant de la sommation en 725 du signal fondamental et des signaux harmoniques convenablement déphasés et amplifiés.

**Revendications**

1. Méthode d'étalement spectral d'un signal à bande étroite, **caractérisée en ce qu'**on module ledit signal en phase à l'aide d'un signal de modulation de phase constitué d'une pluralité de composantes sinusoïdales, ladite pluralité comprenant une composante à une fréquence fondamentale, $\Omega$, et au moins une composante à une fréquence harmonique de cette fréquence, lesdites composantes sinusoïdales étant synchrones et affectées de phases respectivement égales à des multiples successifs de $\pi/2$.

2. Méthode d'étalement spectral selon la revendication 1, **caractérisée en ce que** le signal de modulation est constitué de la composante à la fréquence fondamentale et d'une composante à la fréquence double de cette fréquence, la composante à la fréquence fondamentale étant d'amplitude sensiblement égale à 1.2 et la composante à la fréquence double étant d'amplitude sensiblement égale à 5.9, la phase de la composante à la fréquence double étant décalée de $\pm\pi/2$ par rapport à celle de la composante à la fréquence fondamentale.

3. Méthode d'étalement spectral selon la revendication 1, **caractérisée en ce que** le signal de modulation est constitué de la composante à la fréquence fondamentale et d'une composante à la fréquence triple de cette fréquence, les deux composantes étant de même amplitude sensiblement égale à $0.45\pi$, la phase de la composante à la fréquence triple étant décalée de $\pm\pi/2$ par rapport à celle de la composante à la fréquence fondamentale.

4. Méthode d'étalement spectral selon la revendication 1, **caractérisée en ce que** le signal de modulation est constitué de la composante à la fréquence fondamentale, d'une composante à la fréquence double et d'une composante à la fréquence triple de cette fréquence, l'amplitude de la composante à la fréquence fondamentale étant sensiblement égale à 1.4, l'amplitude de la composante à la fréquence double étant comprise entre 2 et 20 et l'amplitude de la composante à la fréquence triple étant sensiblement égale à 0.4, les phases des composantes à la fréquence double et triple étant respectivement décalées de $\pm\pi/2$ et de $\pi$ par rapport à celle de la composante fondamentale.

5. Méthode d'étalement spectral selon l'une des revendications précédentes, **caractérisée en ce que** le signal à bande étroite est une onde optique.

6. Méthode d'étalement spectral selon l'une des revendications 1 à 4, **caractérisée en ce que** le signal à bande étroite est une porteuse radiofréquence.

7. Méthode d'étalement spectral selon l'une des revendications précédentes, **caractérisée en ce que** l'on module en phase le signal à bande étroite successivement par les différentes composantes sinusoïdales du signal de modulation.

**Patentansprüche**

1. Verfahren zur spektralen Spreizung eines schmalbandigen Signals, **dadurch gekennzeichnet, dass** man das Signal mit Hilfe eines Phasenmodulationssignals phasenmoduliert, welches durch eine Mehrzahl von Sinuskomponenten gebildet ist, wobei die Mehrzahl eine Komponente mit einer Fundamentalfrequenz, $\Omega$, sowie wenigstens eine Komponente mit einer Frequenz umfasst, die eine Harmonische dieser Frequenz ist, wobei die Sinuskomponenten synchron und mit Phasen versehen sind, die jeweils gleich aufeinanderfolgenden Vielfachen von $\pi/2$ sind.

2. Verfahren zur spektralen Spreizung nach Anspruch 1, **dadurch gekennzeichnet, dass** das Modulationssignal gebildet ist durch die Komponente mit der Fundamentalfrequenz sowie eine Komponente mit der doppelten Frequenz dieser Frequenz, wobei die Komponente mit der Fundamentalfrequenz eine Amplitude von im Wesentlichen gleich 1,2 hat, und die Komponente mit der doppelten Frequenz eine Amplitude von im Wesentlichen gleich 5,9 hat, wobei die Phase der Komponente mit der doppelten Frequenz um $\pm\pi/2$ bezüglich jener der Komponente mit der Fundamentalfrequenz verschoben ist.

3. Verfahren zur spektralen Spreizung nach Anspruch 1, **dadurch gekennzeichnet, dass** das Modulationssignal gebildet ist durch die Komponente mit der Fundamentalfrequenz sowie eine Komponente mit der dreifachen Frequenz dieser Frequenz, wobei die zwei Komponenten die gleiche Amplitude haben, die im Wesentlichen gleich 0,45 $\pi$ ist, wobei die Phase der Komponente mit der dreifachen Frequenz bezüglich jener der Komponente mit der Fundamentalfrequenz um $\pm\pi/2$ verschoben ist.

**4.** Verfahren zur spektralen Spreizung nach Anspruch 1, **dadurch gekennzeichnet, dass** das Modulationssignal gebildet ist durch die Komponente mit der Fundamentalfrequenz, durch eine Komponente mit der doppelten Frequenz sowie durch eine Komponente mit der dreifachen Frequenz dieser Frequenz, wobei die Amplitude der Komponente mit der Fundamentalfrequenz im Wesentlichen gleich 1,4 ist, die Amplitude der Komponente mit der doppelten Frequenz zwischen 2 und 20 enthalten ist, und die Amplitude der Komponente mit der dreifachen Frequenz im Wesentlichen gleich 0,4 ist, wobei die Phasen der Komponenten mit der doppelten und der dreifachen Frequenz bezüglich jener der fundamentalen Komponente um $\pm \pi/2$ bzw. um $\pi$ verschoben sind.

**5.** Verfahren zur spektralen Spreizung nach einem der vorhergehenden Ansprüche, **dadurch gekennzeichnet, dass** das schmalbandige Signal eine optische Welle ist.

**6.** Verfahren zur spektralen Spreizung nach einem der Ansprüche 1 bis 4, **dadurch gekennzeichnet, dass** das schmalbandige Signal ein Radiofrequenzträger ist.

**7.** Verfahren zur spektralen Spreizung nach einem der vorhergehenden Ansprüche, **dadurch gekennzeichnet, dass** man das schmalbandige Signal schrittweise durch die verschiedenen Sinuskomponenten des Modulationssignals phasenmoduliert.

## Claims

**1.** A method for spreading the spectrum of a narrowband signal, **characterized in that** said signal is phase-modulated with a phase modulation signal consisting of a plurality of sinusoidal components, said plurality comprising a component at a fundamental frequency $\Omega$ and at least one component at a harmonic frequency of this frequency, said sinusoidal components being synchronous and having phases respectively equal to successive multiples of $\pi/2$.

**2.** The spectrum spreading method according to claim 1, **characterized in that** the modulation signal consists of the component at the fundamental frequency and of a component at a frequency which is twice this frequency, the component at the fundamental frequency being of an amplitude substantially equal to 1.2 and the component at the double frequency being of an amplitude substantially equal to 5.9, the phase of the component at the double frequency being shifted by $\pm \pi/2$ relatively to that of the component at the fundamental frequency.

**3.** The spectrum spreading method according to claim 1, **characterized in that** the modulation signal consists of the component at the fundamental frequency and of a component at a frequency which is thrice this frequency, both components being of a same amplitude substantially equal to $0.45\pi$, the phase of the component at the triple frequency being shifted by $\pm \pi/2$ relatively to that of the component at the fundamental frequency.

**4.** The spectrum spreading method according to claim 1, **characterized in that** the modulation signal consists of the component at the fundamental frequency, of a component at the double frequency and of a component at the triple frequency of this frequency, the amplitude of the component at the fundamental frequency being substantially equal to 1.4, the amplitude of the component at the double frequency being comprised between 2 and 20 and the amplitude of the component at the triple frequency being substantially equal to 0.4, the phases of the components at the double and triple frequency being shifted by $\pm \pi/2$ and $\pi$ respectively, relatively to that of the fundamental component.

**5.** The spectrum spreading method according to any of the preceding claims, **characterized in that** the narrowband signal is an optical wave.

**6.** The spectrum spreading method according to any of claims 1 to 4, **characterized in that** the narrowband signal is a radiofrequency carrier.

**7.** The spectrum spreading method according to any of the preceding claims, **characterized in that** the narrowband signal is successively phase-modulated by the different sinusoidal components of the modulation signal.

# FIG. 1

FIG. 2A

FIG. 2B

FIG. 2C

FIG. 3

FIG. 4

FIG. 5

FIG. 6

FIG. 7A

$750 \sim \bigotimes \; f$

$740_i \sim \boxed{\times i}$   $740_N \sim \boxed{\times N}$

$730_i \sim \bigcirc{i\,\pi/2}$   $730_N \sim \bigcirc{N\,\pi/2}$

$735_1 \sim m_1$   $735_i \sim m_i$   $735_N \sim m_N$

$725$

$710$

$720$

FIG. 7B

**EP 2 359 504 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5566381 B
- US 6282003 B
- US 6535315 B